(19)

Europäisches
Patentamt
European
Patent Office
Office européen
des brevets

(11) **EP 3 131 260 A1**

(12) **EUROPEAN PATENT APPLICATION**

(43) Date of publication:
**15.02.2017 Bulletin 2017/07**

(51) Int Cl.:
**H04L 29/06** *(2006.01)* **G06F 21/62** *(2013.01)*
**H04W 12/02** *(2009.01)*

(21) Application number: **16184108.5**

(22) Date of filing: **12.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.08.2015 US 201562205373 P**

(71) Applicant: **NORTHEASTERN UNIVERSITY Boston, Massachusetts 02115 (US)**

(72) Inventors:
• **CHOFFNES, David**
  **Boston, Massachusetts 02118 (US)**
• **REN, Jingjing**
  **Boston, Massachusetts 02115 (US)**

(74) Representative: **Thompson, Andrew John Withers & Rogers LLP 4 More London Riverside London SE1 2AU (GB)**

(54) **AUTOMATIC DETECTION AND CONTROL OF PERSONALLY IDENTIFIABLE INFORMATION LEAKS IN A NETWORK TRAFFIC**

(57) Disclosed herein are systems and methods to detect and manage information leaks resulting from network flows generated responsive to user interaction with a computing device(105). For example, an information leak control system (110) may be configured to generate an information leak model using at least one labeled network flow comprising at least one labeled information leak, detect an information leak of a device network flow of at least one device based on the information leak model, receive user feedback associated with the information leak, and update the model based on the user feedback. In addition, the information leak control system may be configured to present information leaks to users via a graphical user interface (130) configured to allow users to provide the user feedback. In some examples, the information leak control system may be configured to modify the device network flow based on the information leak and/or the user feedback.

*FIG. 1*

## Description

## CROSS-REFERENCE TO RELATED APPLICATION

This application claim the benefit of priority of 35 U.S.C. § 119(e) to U.S. Provisional Patent Application Ser. No. 62/205,373, filed on August 14, 2015, which is incorporated by reference in its entirety as if fully set forth herein.

## BACKGROUND

Mobile devices have become increasingly popular for providing access to information, social, and entertainment services. However, the systems that provide these services often track and leak mobile device user information, including personally identifiable information (PII). Users are generally unaware of the amount and type of information being shared and/or leaked by these systems or, if they are aware, have little control over their own information when they use services via a mobile device. Conventional techniques to address such PII leaks do not provide adequate visibility into network traffic generated by mobile devices nor do they provide an ability to control device network traffic. For example, passively gathered datasets from mobile Internet Service Providers (ISPs) provide visibility into network traffic, but do not provide any control over network flows. Custom mobile device extensions and analysis tools may provide limited visibility into network flows, but require custom operating systems (OSes) or applications, often requiring warranty-voiding "jailbreaking" of devices. Static analysis tools may identify some information leaks based on the content of application code, but are often imprecise and do not defend against dynamic code loading at run time. Accordingly, conventional technology does not provide for efficient and effective methods for the identification of information leaks or control over network flows of mobile devices.

## SUMMARY

The following presents a simplified summary in order to provide a basic understanding of some novel embodiments described herein. This summary is not an extensive overview, and it is not intended to identify key/critical elements or to delineate the scope thereof. Its sole purpose is to present some concepts in a simplified form as a prelude to the more detailed description that is presented later.

In an embodiment, a system for controlling information leaks in network flows may include at least one processor circuit and a memory unit coupled to the processor circuit. The memory unit may store one or more programming instructions that, when executed, cause the processor to generate an information leak model based on at least one labeled network flow comprising at least one labeled information leak, detect an information leak of a device network flow of at least one device based on the information leak model, receive user feedback associated with the information leak, and update the model based on the user feedback.

In an embodiment, a computer-implemented method for controlling information leaks in network flows may include, by at least one processor circuit, generating an information leak model based on at least one labeled network flow comprising at least one labeled information leak, detecting an information leak of a device network flow of at least one device based on the information leak model, receiving user feedback associated with the information leak, and updating the model based on the user feedback.

In an embodiment, a non-transitory computer-readable storage medium may include instructions for controlling information leaks in network flows that, when executed, cause a system to generate an information leak model based on at least one labeled network flow comprising at least one labeled information leak, detect an information leak of a device network flow of at least one device based on the information leak model, receive user feedback associated with the information leak, and update the model based on the user feedback.

## BRIEF DESCRIPTION OF THE DRAWINGS

FIG. 1 illustrates an embodiment of an operating environment for an information leak control system
FIG. 2 depicts a block diagram of an illustrative information leak control system according to some embodiments.
FIG. 3 depicts an illustrative operating environment for the information leak control system according to some embodiments.
FIG. 4 depicts an illustrative graphical user interface (GUI) according to some embodiments.
FIG. 5 depicts illustrative decision trees according to some embodiments.
FIG. 6 depicts an illustrative logic flow according to a first embodiment.
FIG. 7 depicts an illustrative logic flow according to a second embodiment.
FIG. 8 illustrates an exemplary embodiment of a computing architecture.

## DETAILED DESCRIPTION

The described technology generally relates to information leak control systems for detecting information leaks and providing user control over information transmitted over network flows. In some embodiments, an information leak control system may receive a device network flow from a computing device and analyze the device network flow using an information leak model to detect an information leak. The information leak control system may process the device network flow based on the detected information leak to generate a processed network flow. For example, the information leak control system may remove the information associated with the information leak. In another example, the information leak control system may replace the information associated with the information leak with different information. The information leak control system may transmit the processed network flow to the intended destination of the device network flow. In some embodiments, the information associated with the information leak may be presented to a user via a graphical user interface (GUI). The user may provide user feedback relating to the information leak. For instance, the user may confirm or reject that the information leak is an actual information leak. In another instance, the user may provide one or more actions for the information leak, including, without limitation, removing the information from network flows or replacing the information with different information.

The information leak control system may generate the information leak model using one or more training network flows. For example, a training network flow may include a labeled network flow in which information leaks have been labeled. The labeled network flows may be used to extract features of network flows to use for determining information leaks. In some embodiments, a population of information leak features may be selected from the extracted features based on one or more factors to reduce the feature set, for example, to provide for more accurate and efficient information leak detection. The information leak control system may generate one or more classifiers to determine whether a network flow includes an information leak. In some embodiments, one or more information leak models may be generated based on the classifiers to detect, predict, or otherwise identify information leaks.

In some embodiments, the information leaks may include personally identifiable information (PII) leaks. In general, PII include information that may be used to distinguish or determine an individual's identity. Non-limiting examples of PII may include device identifiers (for instance, device identifiers specific to a device or operating system (OS) installation (for example, an integrated circuit card identifier (ICCID), an international mobile equipment identity (IMEI), an international mobile subscriber identity (IMSI), MAC address, Android™ ID, Android™ Advertiser ID, iOS IFA ID, Windows® Phone Device ID, and/or the like), user identifiers (for instance, information that may identify a user, such as name, gender, birth date, e-mail address, mailing address, relationship status, education , occupation, employer, and/or the like), contact information (for instance, phone number, address book information, and/or the like), location information (for instance, global positioning system (GPS) data, latitude and/or longitude, zip code, address, business location, and/or the like), credentials (for instance, username, password, handle, and/or the like), and/or the like.

In some embodiments, an information leak ("leak" or "PII leak") may include any private, confidential, or other personal information (including, for example, PII) transmitted from a computing device (for instance, a smartphone or tablet computing device) to a third party. In some embodiments, an information leak may be known and acceptable to a user (for example, transmitting credentials to access an Internet service). In some embodiments, an information leak may be known and unacceptable to a user (for instance, transmitting credentials in plaintext and/or to an unauthorized third party). In some embodiments, an information leak may be unknown to a user. In some embodiments, an information leak may occur over insecure channels (for example, hypertext transfer protocol (HTTP) and secure channels (for example, secure HTTP (HTTPS)). A non-limiting type of information leak may include leaks generated via data-exfiltrating applications (or "apps"). In general, a data-exfilitrating app may directly, or indirectly via advertisers and/or analytics libraries, collect PII from users' mobile devices. In addition, data-exfiltrating apps often collect PII that is beyond what is required to use the source application. In some embodiments, the information leak control system may present users with the information leaked during use of an application, including via a data-exfiltrating app. Accordingly, in some embodiments, the information leak control system may increase user awareness and knowledge about information leaks. Another non-limiting type of information leak may be generated via eavesdropping on network traffic. For example, a third-party, particularly an unauthorized third-party, may listen to network traffic that is exposed in plaintext, such as unencrypted wireless access point, tapping wired network traffic, and/or the like.

The information leak control system provides multiple technological advances over and provides multiple technical features not present in traditional paper-based systems, conventional computer-based systems, and/or hybrid paper- and computer-based systems. Paper-based systems, such as conventional charting and/or mapping techniques, are not capable of providing a user interface for interactive access to information leaks, control over network flows, and/or the like. In particular, traditional paper-based information systems rely on collections of paper charts and past records of network flows and information leaks. Such paper files are not capable of being automatically or dynamically updated and do not provide access to user information history (for example, information leaks associated with a user's interactions on a mobile device), including multiple iterations of user information history. Accordingly, developers, users, and other stakeholders are not able to access all of the information necessary to efficiently make accurate and reliable assessments using such paper-based files. In addition, developers and users are not able to efficiently access the information that they need, as obtaining information requires physically searching through multiple documents, charts, and other files. Conventional computer-based systems suffer from much of the same deficiencies as paper-based systems, except that the developer or user is interacting with a computer screen instead of a paper file.

Although a computer is able to locate and process information much faster, such conventional computer-based systems are not configured to present information leaks in an efficient, meaningful way that assists developers and users with making faster and more accurate decisions for improving device and/or service functionality and/or user experience. Conventional computer-based systems require developers and users to go through myriad tedious drop-down selections, pages, search queries, documents, charts, and static information graphics in order to access information. Conventional computer-based systems are able to present information faster, however, they are not able to present meaningful information that assists platform developers with efficiently sharing information and making quick and accurate decisions.

The GUI interfaces for graphically representing information leaks according to some embodiments function differently from conventional GUI interfaces. For example, the GUI interfaces according to some embodiments improve the way that a computer graphically presents information to users and allows users to interact with the information. The methods and systems described according to some embodiments, in contrast with conventional technology, reduce the time and cognitive effort required for developers and users to access, quantify, and assess information leaks in a meaningful way that leads to faster and better decision making. For example, methods and systems described according to some embodiments would allow a user to visualize the information being leaked as a result of their activity on a computing device and to control the information shared via information flows transmitted via the computing device. Accordingly, users may be able to take perform certain actions and/or change behaviors relating to use of computing devices and/or applications installed thereon. For example, the information leak information provided via the GUI interfaces according to some embodiments may trigger users to take certain actions to protect their privacy and/or information. For examples, the GUI interfaces may facilitate users to spend more time reviewing claims made by applications regarding access to user data, to stop using or reduce usage of applications that the information leak control system has indicated leak information or leak too much information, to keep location services off unless needed, and to block information that the user does not want to be leaked or otherwise shared.

The system presents novel software tools and user interfaces that solve technical problems relating to providing information leak control services. A non-limiting example of a technical problem that is solved by the system is providing efficient and effective access to the information necessary to determine information leaks. Using conventional technology, such information is either not available, is incomplete, and/or requires modification to computing devices and/or device OSes. Thus, using such conventional technology, it may not be feasible or possible to obtain and/or understand the necessary information. Systems and methods according to some embodiments operate to identify information leaks over a network by interposing on network traffic, which provides a platform-independent way to detect and mitigate information leaks. Accordingly, by operating on network traffic alone to detect and control information leaks, embodiments may be deployed in mobile networks, home networks, in the cloud, or on mobile devices without requiring, for example, special privileges or custom OSes. Embodiments of the described technology provide specific improvements to computer-related technology and conventional technological processes by solving these technical problems, as well as multiple others. A system according to various embodiments of the present teachings can solve these technical problems, as well as multiple others, for example, by centralizing the information relating to information leaks and presenting this information to users in a user-friendly and efficient manner.

Conventional technologies do not provide sufficient visibility into information leaks, provide few options to control information leaks, and, thus, significant amount of potentially sensitive information is transmitted from user devices. Accordingly, some embodiments provide software and/or hardware tools that detect information leaks, visualize how user information is shared with various services, websites, and/or the like, and allows users to change the shared information (including modifying the shared information or blocking connections entirely). A limitation of conventional technology is that detection of information leaks required prior knowledge of the information to be detected. Accordingly, in some embodiments, systems and methods may accurately identify information leaked in network flows without requiring prior knowledge of user information. In addition, in some embodiments, systems and methods may improve awareness of information leaks by presenting this information directly to users, improve the classification of sensitive information based on user feedback, and enable users to change the information transmitted in information flows by modifying or removing leaked information. In some embodiments, as described in more detail below, methods and systems may use network trace analysis, machine learning, crowdsourcing, and/or user feedback to generate models for detecting information leaks and/or to manage detected information leaks.

In some embodiments, the information leak control system may support existing OS features of computing devices to redirect all or a portion of a computing device's network traffic (for example, Internet traffic) to the information leak control system (for example, a server or third-party server of the information leak control system) to identify and control information leaks in network traffic. Accordingly, the information leak control system according to some embodiments may detect and control information leaks from network flows without requiring access to a computing device service provider (for instance, an Internet Service Provider (ISP)). In some embodiments, the information leak control system may use middleboxes implemented in hardware and/or software running atop one or more servers (for instance, trusted servers in a home, corporate, or other entity network), which does not require rooting computing devices, deploying hardware, or other obtrusive access. Accordingly, the information leak control system may be immediately and globally deployable across various platforms and computing devices.

Conventional technologies are not able to detect information leaks without prior knowledge of the contents of the information (for example, PII) to be detected in advance. A solution such as running every application in every app store to determine when information is leaked would allow for the formulation of regular expressions to identify information leaks from these applications regardless of the user. However, such a solution is too expensive, time consuming, and resource-intensive to be usable. First, it is impractically expensive to run such automation for all applications (for instance, each app in a particular app store) and there are no efficient tools for doing this outside of Android. Second, it is difficult (if not impossible) to use automation to explore every possible code path that would result in information leaks, meaning this approach would miss significant information that may be leaked. Third, such an approach is incredibly susceptible to changes. For example, if a tracker changes the contents of flows leaking information at all, the regular expression would fail. Accordingly, in some embodiments, the information leak control system may build a model of information leaks that accurately identifies them for arbitrary users. This allows the information leak control system to use a small set of training network flows, combined with user feedback about suspected information leaks, to inform the identification of information leaks for a large number of applications.

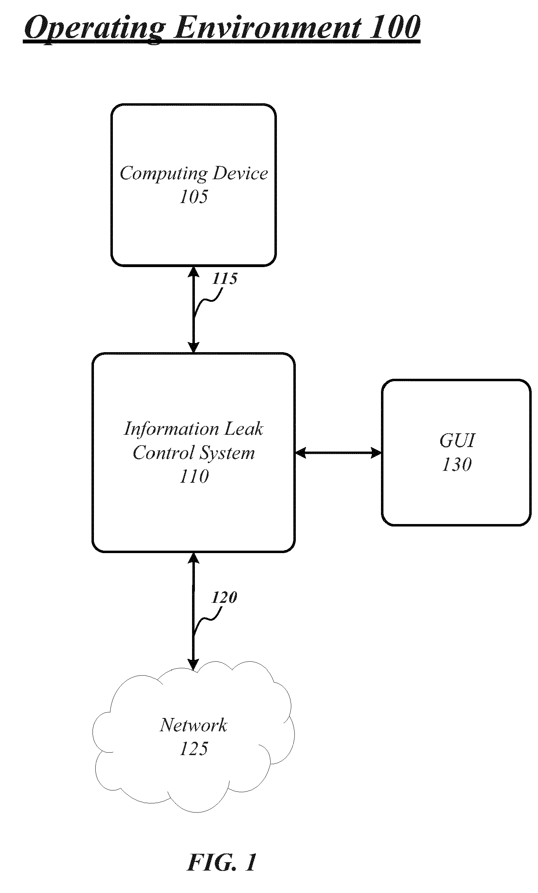

FIG. 1 illustrates an embodiment of an operating environment 100 for an information leak control system. In some embodiments, a computing device 105 may transmit a device network flow 115 to a network 125, such as the Internet. Some examples of a computing device 105 may include, without limitation, an ultra-mobile device, a mobile device, a personal digital assistant (PDA), a mobile computing device, a smart phone, a telephone, a digital telephone, a cellular telephone, electronic readers (e.g., eBook readers, e-readers, etc.), a handset, a one-way pager, a two-way pager, a messaging device, a computer, a personal computer (PC), a desktop computer, a laptop computer, a notebook computer, a netbook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, game devices, television, digital television, set top box, wireless access point, machine, Internet-of-Things devices such as thermostats, video surveillance devices, personal sensors, appliances or combinations thereof. The embodiments are not limited in this context.

In general, the device network flow 115 may include the flow of data over a network connection from the computing device 105 to a destination, such as network 125 (for example, an Internet server). For instance, device network flow may include a traffic flow or packet flow that includes a sequence of packets transmitted by the computing device 105 to a destination using various communication channels. Non-limiting examples of communication channels may include HTTP, HTTPS, secure sockets layer (SSL), and/or the like. In some embodiments, information transmitted via device network flow 115 may be unencrypted (for instance, in "plaintext"), encrypted, and/or a combination thereof. Although embodiments describe detecting and controlling information leaks in network flows, embodiments are not so limited. For example, other information types, data sets, communication methods, and/or the like may be analyzed and/or controlled for information leaks according to some embodiments. Embodiments are not limited in this context.

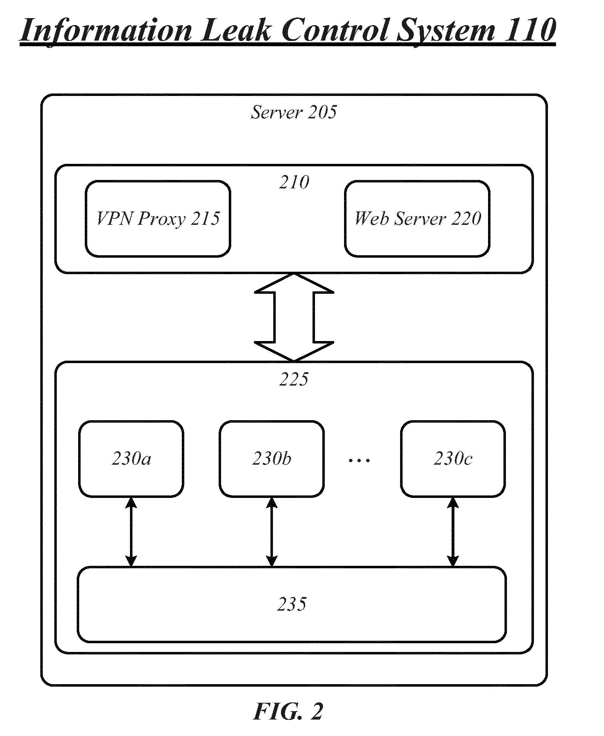

In some embodiments, the device network flow 115 may be redirected to an information leak control system 110 (see, for example, FIG. 2). In some embodiments, an information leak control application (for instance, a client application, a mobile application ("mobile app" or "app"), or the like) may be installed on the computing device 105 to redirect the device network flow 115 to the information leak control system 110. In some embodiments, a virtual and/or hardware device may be installed in a network used by the computing device 105 (e.g., a Wi-Fi network, a local area network (LAN), a wide area network (WAN), corporate network, firewall, virtual private network (VPN), and/or the like) that receives device network flow 115 before the device network flow 115 is transmitted to the intended destination (for instance, network 125).

The information leak control system 110 may analyze the device network flow 115 to detect whether the device network flow 115 includes information leaks. Accordingly, in some embodiments, the information leak control system 110 may process the device network flow 115 based on the detected information leaks according to one or more information leak actions to generate a processed network flow 120. For instance, the information leak control system 110 may detect a first information leak associated with a first information element (for instance, a device ID). A user associated with the computing device 105 may have specified an information leak action for information leaks associated with the first information element, such as removing or otherwise blocking of the first information element. Accordingly, the information leak control system 110 may process the device network flow 115 by removing or otherwise blocking the first information element from being transmitted in the processed network flow **120.** In another instance, the user may have specified that no action is to be taken if the device network flow **115** is associated with a first application and to replace the first information element with different information is the device network flow **115** is associated with a second application. Accordingly, the information leak control system **110** may determine which application the device network flow **115** is associated with and may generate the processed network flow **120** accordingly. The information leak control system **110** may transmit the processed network flow **120** to the intended destination, such a destination server on the Internet **125.**

In some embodiments, the information leak control system **110** may present the information leaks and information associated with the information leaks via an information leak graphical user interface (GUI) **130.** In this manner, a user may access information leaks resulting from activity associated with the computing device **105.** In some embodiments, a user may provide user feedback relating to the information leaks presented via the information leak GUI **130.** For example, the user feedback may include actions to be taken for information leaks, verification of information leaks detected by the information leak control system **110,** and/or the like. Accordingly, in some embodiments, the information leak control system **110** may modify, update, or otherwise improve the processes used to detect and manage information leaks based on user feedback.

FIG. 2 depicts a block diagram of an illustrative information leak control system **110** according to some embodiments. As shown in FIG. 2, the information leak control system **110** may include a server **205.** Computing devices **105** may be configured to communicate device network flows **115** with frontend services **210,** such as a VPN proxy **215** and/or a web proxy **220,** of the information leak control system **110.** The device network flows **115** may be transmitted to a software or hardware middlebox **225** to process the device network flows **115** using various services or plug-ins **230a-n** including, without limitation, DNS, traffic monitoring, traffic filtering, proxy, information leak detection, information leak processing, GUI processing and/or presentation, content blocking, and/or the like. The middlebox **225** may include a controller **235** for controlling the various services **230a-n.** In some embodiments, a device network flow **115** may be encrypted before use and/or storage by the information leak control system **110,** for example, to protect user privacy. In some embodiments, the information leak control system **110** may capture certain portions of traffic, such as HTTP GET/POST parameters, where most information leaks occur.

In some embodiments, the information leak control system **110** may be implemented using a framework that combines virtual private networks (VPNs) with middleboxes. In some embodiments, the information leak control system **110** may support a plugin infrastructure for custom processing of device network flows **115.** For example, each plugin may take as input a device network flow **115** and may output a network flow, such as a processed network flow **120** (which may include empty network flows). For example, when a packet arrives at the information leak control system, a software defined switch may determine the ordered set of plugins that the corresponding flow will traverse. Accordingly, the information leak control system **110** according to some embodiments may support in situ measurement and experimentation via an end-user deployment.

Conventional technologies are not able to accurately and efficiently manage information leaks, particularly when the content of the information that is leaked is not known in advance. One conventional solution is to simply block all advertising and tracking sites. However, this is a blunt and indiscriminate approach that can disrupt business models supporting various platforms, such as free apps. Another proposed conventional solution is to execute each app of interest (including various OS and device-specific versions) to determine when information is leaked. However, this approach is impractical and would require a prohibitive amount of time and resources. In addition, it may not be possible to use automation to explore every possible code path that would result in information leaks. Moreover, if a tracker changes the contents of flows leaking information, the regular expression detecting the information leak would fail. Accordingly, some embodiments use machine learning to build a model of information leaks that accurately identifies them for arbitrary users. Such embodiments provide for the use of a small set of training network flows that may be combined with user feedback regarding suspected information leaks to determine the identification of information leaks for a large number of applications.

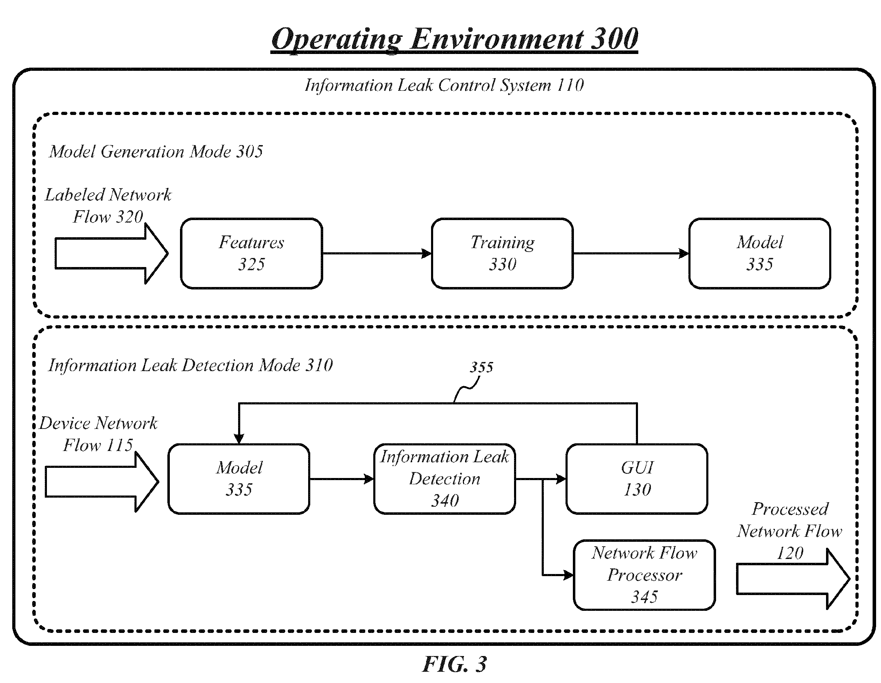

FIG. 3 illustrates an embodiment of an operating environment **300** for an information leak control system **110.** In some embodiments, an information leak control system **110** may execute an information leak control application configured to operate in a model generation mode **305** of operation to generate a model **335** for detecting information leaks according to some embodiments. The information leak control system **110** may access one or more labeled network flows **320.** A labeled network flow **320** may include known, labeled information leaks. In some embodiments, a labeled network flow **320** may include simulated and/or historical network traffic, traces, and/or the like. In some embodiments, the labeled network flow **320** may be based on labels collected from users (for example, via GUI **130**). In some embodiments, the labeled network flow **320** may be based on datasets resulting from manual and/or automated experiments of network flows resulting from computing device **105** interactions with applications, services, websites, domains, servers, and/or the like. For example, a labeled network flow **320** may be generated by manually or automated interactions with an application installed on a smartphone computing device **105.** For example, one or more computing devices **105,** such as smartphones or tablet computing devices using the Android™ or iOS OSes may have one or more applications (for example, mobile apps or apps). For manual experiments, a user may interact with the app on the computing device **105,** for example, entering credentials, and/or the like. For automated experiments, automation software may be installed on the computing device **105** that may interact with the app. Unique or otherwise distinguishable information, such as credentials, identifiers, and/or the like, may be used during interactions with the app so that information leaks may be detected and labeled. In some embodiments, the labeled network flow **320** (for instance, an HTTP flow) may be extracted from raw traffic (for instance, Internet protocol (IP) traffic) generated via mobile device interaction with an app. The unique information may be located in the labeled network flow **320** and labeled.

As shown in FIG. 3, features **325** may be extracted from the labeled network flow **320.** In some embodiments, features **325** may be extracted using a "bag-of-words" model and/or a variation thereof. For instance, certain characters may be chosen as separators and information included between separators may be considered as a word. In some embodiments, a vector of values for each detected word is generated for each labeled network flow **320.** In some embodiments, the values may include binary values where each word that appears in a labeled network flow **320** is set to 1, and each word that does not appear in the labeled network flow **320** is set to 0.

Information leaked via a device network flow **115** may be encoded using various techniques, including, without limitation, gzip, JSON, XML. Each technique may use different characters as separators. For example, a colon (:) could be part of a MAC address (e.g., 02:00:00:00:00), a time-of-day (e.g., 11:59), or JSON data (e.g., username:user007). Accordingly, in some embodiments, a set of common delimiters (e.g., ",", ";", "/", "(", ")", "{", "}", "[", "]", and/or the like) may be used as common delimiters. In some embodiments, ambiguous delimiters, such as delimiters not included in the set of common delimiters may be determined by inspecting the surrounding content to determine encoding type based on context (for example, looking at content-encoding hints in an HTTP header or whether the content appears in a GET parameter).

The bag-of-words model may produce a large population of features **325** that may affect the accuracy and/or efficiency of detecting information leaks. In some embodiments, determining the features **325** may include reducing the feature set to a population of selected features. For example, reducing the feature set may improve accuracy and/or efficiency of detecting information leaks and reduce overfitting. In another example, reducing the feature set may reduce the training time for classifiers. However, a sufficient number of features may be required to have a useful, complete classifier and/or model. In some embodiments, to reduce the feature set, low-frequency words may be excluded, for example, because information leaks rarely occur only once (or other low number), while session keys and ephemeral identifiers tend to appear in exactly one (or other low number) network flow. Accordingly, embodiments may employ a word frequency threshold filter to remove a feature if the frequency of the feature is below a word frequency threshold. In some embodiments, the word frequency threshold may be 1, 2, 3, 4, 5, 10, 15, 20, 50, 100, and/or any value or range between any two of these values. In some embodiments, the frequency threshold may be 20. In some embodiments, the frequency threshold may be 21. In some embodiments, the selection of an optimum frequency threshold or threshold range may be based on analyzing information leak detection information and updating as appropriate based on updated information. In some embodiments, selection of an optimum threshold may be based on an average threshold across domains (for example, of the per-domain-per-OS classifiers). In some embodiments, selection of a frequency threshold may modify the number of features. In some embodiments, the number of features may be specified. In general, increasing the number of features may improve classifier accuracy but increase classifier training time. In some embodiments, a feature maximum may represent a number of features for which the addition of more features does not benefit accuracy. In some embodiments, the feature maximum may be about 200. In some embodiments, the feature maximum may be about 100, about 150, about 200, about 250, about 300, about 500, about 1000, and any value or range between any two of these values (including endpoints).

In some embodiments, to avoid filtering information leaks that occur rarely in the labeled network flow **320** but are to be maintained, such rarely-occurring information leaks may be oversampled, for example, so that the number of occurrences may be greater than the word frequency threshold. In some embodiments, information values (e.g., the value "123" in the key/value pair "device identifier : 123") may be randomized in the labeled network flow **320** to prevent the value being used as a feature. In some embodiments, stop-word-based filtering may be used to select features **325,** particularly for words that commonly appear in labeled network flows **320.** For example, in HTTP network flows, "content-length:", "en-us", and "expires" may be common words. In some embodiments, stop-word-based filtering may use stop words determined by term frequency-inverse document frequency ("tf-idf"). In some embodiments, features that have relatively low tf-idf values may be selected as features **325.** In some embodiments, features that have relatively low tf-idf values and that do not appear adjacent to an information leak may be selected as features **325.**

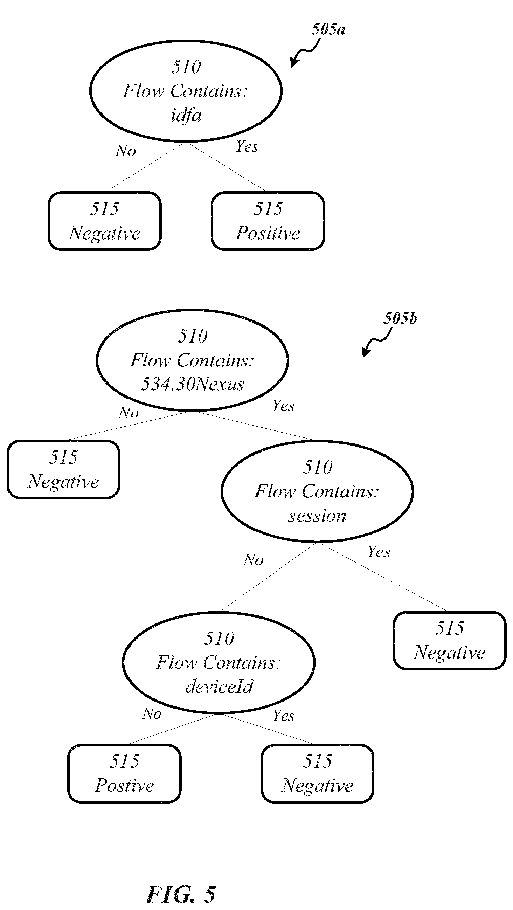

In some embodiments, the features **325** may be used as part of a training process **330.** In some embodiments, the training process **330** may generate classifiers that may be used to determine and/or predict whether a network flow includes information leaks. Various classifiers may be used according to some embodiments. A non-limiting example of a classifier may include a decision tree (DT) classifier (for example, C4.5 DT) (see, for example, FIG. 5), a Naive Bayes classifier, k-nearest neighbor (kNN), methods atop DTs (e.g., Ada-Boost, Bagging, and Blending), and/or combinations thereof. Information leaks may occur in structured data, for example, in key/value pairs. Accordingly, a DT-based classifier may be used, for instance, to represent chained dependencies between the keys and/or key/value pairs and the likelihood of leaking information. In some embodiments, the training process 330 may be configured to reduce or even eliminate false positives (FPs) (for example, indicating an information leak when an actual information leak has not occurred) and/or false negatives (FNs) (for example, missing an information leak) that occur during information leak detection (e.g., leak detection "in the wild" using actual user data).

In some embodiments, one or more data mining tools may be used to train classifiers that detect and/or predict information leaks. A non-limiting example of a data mining tool may include the Waikato Environment for Knowledge Analysis (Weka) developed at the University of Waikato, New Zealand. In some embodiments, the classifiers may be validated, for example, using one or more cross-validation processes. In some embodiments, a cross-validation process may include k-fold cross validation. A non-limiting example of an illustrative k-fold cross validation may include using a random (k-1)/k of the network flows of a dataset to train a classifier and the remaining 1/k of the flows to test for accuracy. In various embodiments, k may equal 2, 3, 4, 5, 10, 20, and values and ranges between any two of these values (including endpoints). In some embodiments, cross-validation may be repeated, for instance, n times.

In some embodiments, a classifier may include association processes or rules, for example, that certain features may represent leaks in the presence of other information, elements, and/or features. For example, the Android™ Advertiser ID may be leaked to the tracker <tracker.com> when the text "idfa" is present in network traffic. In another example, the feature "auid" may not always be associated with an IMEI value and the classifier may learn that the IMEI will not be present, for instance, for certain request and/or for certain requests if other elements are present (for example, if "urid" is present in the network flow) or are not present. In a further example, the term "email" may appear in both network flows that contain information leaks (for example "positives" or "positive flows") and in network flows that do not contain information leaks (for example, "negatives" or "negative flows"). The classifier may learn through training that an information leak may occur in a "/user/" request when the terms "session" and "deviceId" are not present. Embodiments are not limited in this context.

In some embodiments, the classifiers may be used to generate information leak models 335. In some embodiments, an information leak model 335 may be specific for a particular domain, application, OS, platform, and/or the like. For example, information leaks to the same destination domain may generally use the same or similar data encodings to transfer information over the network; however, these encodings may differ across OSes. Accordingly, in some embodiments, information leak models 335 may be domain and OS specific (e.g., using "per-domain-and-OS" or PDAO classifiers). For example, an information leak model 335 may include one classifier for each destination domain-OS pair, instead of one single general classifier. In an embodiment using HTTP network flows, the domain associated with each network flow may be identified based on the "Host:" parameter in the HTTP header and/or by identifying the domain associated with each IP address by finding a corresponding DNS lookup, for example, in packet traces. In some embodiments, the OS associated with a network flow may be identified using various techniques including. Non-limiting examples of OS detection techniques may be based on different authentication mechanisms, for instance, with the VPN of the information leak control system, user information, and/or the like. In some embodiments, per-domain-and-OS classifiers may improve performance in terms of lower-latency detection and/or prediction of an information leak, which may facilitate detecting and intercepting information leaks in-band. In some embodiments, every information leak for every user does not need to be labeled in the labeled network flow 320; rather, a small number of labeled instances from a small number of users may be used to identify information leaks for all users whose traffic visits a related domain. In some embodiments, training of a per-domain-and-OS classifier may require time on the order of seconds or minutes for training on thousands of network flows.

In some embodiments, a general classifier may be generated (for instance as opposed to a per-domain-and-OS classifier), for example, for low-traffic domains. In some embodiments, a general classifier may include fewer labeled information leaks compared with a per-domain-and-OS classifier. Accordingly, to address potential bias, undersampling on negative samples may be used, for instance 1/10 sampling to randomly choose a subset of available samples.

The information leak control application may operate in an information leak detection mode 310. In the information leak detection mode 310, one or more device network flows 115 may be analyzed for information leaks using the model 335 (or a variation thereof) developed during the model generation mode 305 of operation. For example, information leak detection 340 may be performed on a device network flow 115 using the model 335. In some embodiments, a classifier of the model 335 may indicate whether a device network flow 115 contains an information leak. In some embodiments, the classifier may include a machine learning classifier. In some embodiments, information leak detection 340 may support interactive leak detection that may include information labelling and filtering. In some embodiments, interactive leak detection may include using push notification and/or other channels to notify a user of information leaks immediately when detected and allow a user to immediately or substantially immediate provide a response to the information leak (for instance, allow, deny, replace, and/or the like). In some embodiments, the process of information leak detection **340,** including, for example, information leak detection and/or prediction and information leak extraction, may require an information leak detection time of about 0.25 milliseconds (ms) to about 6.5 ms per network flow. In some embodiments, the information leak detection time may be about 0.25 ms, 0.5 ms, 1 ms, 2 ms, 5 ms, about 5.5 ms, about 6 ms, about 6.5 ms, about 7 ms, about 8 ms, about 9 ms, about 10 ms, about 20 ms, about 25 ms, about 50 ms, about 100 ms, and any value and/or range between any two of these values (including endpoints). In some embodiments, the accuracy of information leak detection **340,** for example, across all per-domain-per-OS classifiers, may be about 90%, about 95%, about 99%, or greater than 99%.

In some embodiments, the process of information leak detection **340** may include identifying which content in the device network flow **115** is an information leak. For example, information leak detection **340** may determine that the information leak is a "device ID" and may provide the value of the information leak (for instance, "device ID = 123"). In some embodiments, identifying content of an information leak may involve evaluating key/value pairs associated with an information leak. For example, a key may include "username" and the associated value may be "Userl." Key/value pairs may not be consistent across, domains, devices, OSes, platforms, applications, and/or the like. For instance, the key "device_id" or "q" may each indicate an IMEI value for different domains; however, "q" may not always be associated with an information leak.

Accordingly, in some embodiments, heuristics for identifying "suspicious" keys may be used to identify and/or predict keys that are likely associated with information values. For example, the process of information leak detection **340** may including determining a relative probability that a suspicious key is associated with an information leak (for example, a PII leak) according to the following formula: $P_{type,key} = \frac{K_{PII}}{K_{all}}$, wherein "*type*" is the PII type (for example, IMEI, e-mail address, and/or the like), *"key"* is the suspicious key for that type of PII, *"$K_{PII}$"* is the number of times the key appeared in one or more network flows identified with PII leaks, and "$K_{all}$" is the number of times that the key appeared in all network flows. In some embodiments, a key may be designated as a suspicious key if $P_{type,key}$ is greater than a suspicious key threshold value. In some embodiments, the key threshold value may be determined based on FPs and true positives (TP) for the network flow and/or associated data set. In some embodiments, the key threshold value may be modified to change the sensitivity of detecting suspicious keys. In some embodiments, the suspicious key threshold value may be set at 0.2. In various embodiments, the suspicious key threshold may be 0.05, 0.1, 0.2, 0.3, 0.4, 0.5, 0.6, 0.7, 0.8, 0.9, 1.0, and values and ranges between any two of these values (including endpoints). In some embodiments, the process of information leak detection **340** may include use of a decision tree classifier, for example, to observe that a root of each tree is likely a key corresponding to a PII value. In some embodiments, the roots may be added to the suspicious key set. In some embodiments, the roots may be added to the suspicious key set and assigned a large $P_{type,key}$ value.

In some embodiments, all or a portion of a labeled network flow **320** and/or device network flow may be encrypted and/or obfuscated. In some embodiments, the information leak control system **110** may be configured to generate models **335,** perform information leak detection **340,** and process via a network flow processer **345** encrypted network flows. A non-limiting example of an encrypted network flow may include SSL network traffic. For example, the information leak control system **110** may decrypt and/or access a decrypted version of the encrypted network flow, for instance, to obtain a plaintext version. In another example, the information leak control system **110** and/or a user may provide mediated access to encrypted traffic. In a further example, a user may operate an encryption proxy server (for instance, an SSL proxy) on a trusted computing device (for instance, a home appliance, such as a PC or gateway). In some embodiments, the information leak control system **110** may detect data obfuscation techniques and operate to reverse engineer the obfuscation techniques (for instance, for salted hashing, determine the salt and hash function). The obfuscation techniques and the processes for de-obfuscation may be implemented in the models **335,** information leak detection **340** process, and/or network flow processor **345** to manage obfuscated information leaks.

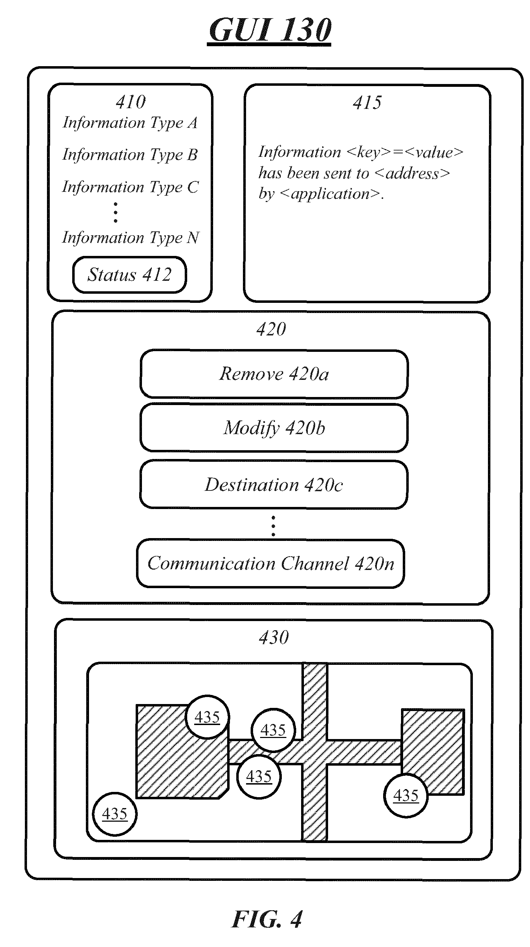

In some embodiments, detected and/or predicted information leaks and/or information associated therewith, may be presented via a GUI **130** (see, for example, FIG. 4). In this manner, users may access and visualize information leaks associated with device network flows **115** resulting from interaction with user mobile devices **105.** The information leak control application may receive, obtain, or otherwise access user feedback **355** provided by users via the GUI **130.** The user feedback **355** may generally include information associated with information leaks presented via the GUI **130.** Non-limiting examples of user feedback **355** may include confirmation of an information leak, rejection of an information leak (for instance, the user may specify that a detected information leak is not an information leak), labels for information leaks, actions to take responsive to an information leak, and/or the like. The information leak control application may use the user feedback **355** to update, modify, verify, or otherwise process the model **335**. For example, user feedback **355** indicating that a first key is associated with a PII leak may cause the first key to be labeled as a PII leak in the model **335** instead of as a suspicious key. In another example, a user may provide a label for a PII leak that may be used to update the model **335**. Accordingly, the model **335** may be updated for missed information leak labels.

In various embodiments, a network flow processor **345** may operate to process the device network flow **115** based on detected and/or predicted information leaks. For example, the network flow processor **345** may include and/or may access one or more actions, rules, processes, and/or the like ("information leak control processes") for controlling information leaks. In some embodiments, the information leak control processes may include actions for removing, blocking, replacing, information leaks and/or network flows associated with information leaks. In some embodiments, the network flow processor **345** may include various default information leak control processes. For example, a default information leak control process may include blocking or removing plaintext password information leaks. In some embodiments, an information leak control process may be determined based on user feedback **355**. For instance, the GUI **130** may allow users to specify actions to be taken responsive to various information leaks (see, for example, FIG. 4). In a non-limiting example, user feedback **355** may provide that any plaintext location information should be blocked, except for location information associated with a certain application (for instance, a map application).

The network flow processor may generate a processed network flow **120** modified according to detected and/or predicted information leaks and/or the information leak control processes. For example, the process for information leak detection **340** may analyze a device network flow **115** associated with a first application being executed on a computing device **105** and predict a first information leak, for instance, a device identifier, and a second information leak, for instance, a username. A first information leak control process may specify that no action is to be taken for a device identifier for information leaks associated with the first application. A second information leak control process may specify that username information leaks are to be blocked. Accordingly, the processed network flow **120** may include the device identifier information, but may have the username device identifier removed.

FIG. 4 depicts a block diagram of an illustrative GUI **130** according to some embodiments. As depicted in FIG. 4, the GUI **130** may present information leaks **410**. In some embodiments, the information leaks **410** may include previously detected information leaks, predicted information leaks, potential information leaks, and/or the like. In some embodiments, a user may focus the GUI **130** on one or more devices, OSes, applications, network flows, developers, and/or the like. In this manner, the GUI **130** may present information leaks **410** associated with one or more specific items of focus. For example, a user may select to focus the GUI **130** on a particular application that they have executed on their computing device **105** to see information leaks **410** associated with a particular application. In another example, a user may select to focus the GUI **130** on a particular application that is not or has not been executing on their computing device **105** to see the types of information leaks that other users have experienced or are predicted to experience with the particular application. The information leaks **410** may include leaked information of various types and/or categories. For instance, the information leaks **410** may include passwords, names, e-mail addresses, zip codes, gender, relationship statuses, birth dates, phone numbers, MAC address, residence/work addresses, locations, and/or the like. In some embodiments, the GUI **130** may allow the user to provide user feedback **355** in the form of a status identifier **412** for an information leak **410**. The status identifier **412** may allow a user to confirm or reject the information leak **410**. In some embodiments, the status identifier **412** may allow the user to provide various other statuses of information leaks **410,** such as unknown, unsure, maybe, and/or the like. In various embodiments, the user feedback **355,** for example, in the form of status identifiers **412,** provided by a particular user may be used to update models **335** used by the information leak control system **110** for other, arbitrary users. In this manner, some embodiments provide that the models **335** may be updated by crowd-sourcing and/or machine learning techniques based on user feedback **355** received from users of the information leak control system **110**.

In some embodiments, leak details **415** may be presented for the information leaks **410**. For example, selection of an information leak **410** object may cause the GUI to present the corresponding leak details **415** including, without limitation, a key, a value, a key/value pair, a domain, a URL, a website, an application, whether the leak is associated with a tracker, a tracker, a timestamp, a number of times the information leak has occurred, and/or the like.

In various embodiments, the GUI **130** may allow a user to specify user feedback **355** in the form of actions **420a-n**. For example, an action **420a-n** may specify an action or process (for instance, an information leak control process) to be performed for a particular information leak **410**. For example, a user may specify that a particular information leak **410** be removed **420a** or modified **420b** (for instance, replaced with a different value). A user may also specify a destination **420c** and/or communication channel **420n** associated with an action. For example, the user may specify that a certain action only be performed for a specific destination (for instance, a certain domain) and/or communication channel (for instance, for HTTP and not for HTTPS or SSL). In some embodiments, the actions **420a-n** may be implemented as an information leak control process. In this manner, a user may use the GUI **130** to view and create custom filters to block or otherwise manage information leaks.

In some embodiments, the GUI **130** may present a map **430** graphically representing a map view of location information leaks **435**. For example, the map **430** may present a location information leak **435** for each information leak of location information (for instance, GPS location information, place of business, latitude and longitude, and/or the like) or specified information leaks associated with a particular computing device, application, and/or the like.

FIG. 5 depicts DTs according to some embodiments. In some embodiments, DTs **505a** and **505b** may include nodes **510** and leaves **515**. In some embodiments, DTs **505a** and **505b** may be DTs used in per-domain-per OS classifiers according to some embodiments. In various embodiments, a classifier may begin at a root (top) node **510** and travers the DT based on whether the term or feature (e.g., "idfa" for DT **505a**) is present. The leaves **515** indicate whether an information leak has been detected for the particular path of the DT.

Included herein is a set of flow charts representative of exemplary methodologies for performing novel aspects of the described technology according to some embodiments. While, for purposes of simplicity of explanation, the one or more methodologies shown herein, for example, in the form of a flow chart or flow diagram, are shown and described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

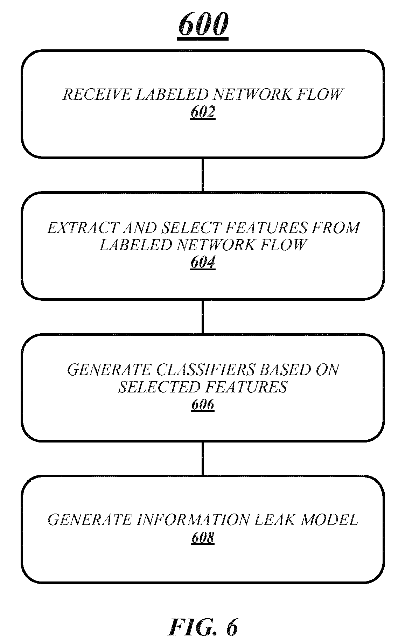

FIG. 6 depicts an illustrative logic flow according to a first embodiment. More specifically, FIG. 6 illustrates one embodiment of a logic flow **600**. The logic flow **600** may be representative of some or all of the operations executed by one or more embodiments described herein. For example, the logic flow **600** may illustrate operations performed by the information leak control system **100**.

In the illustrated embodiment shown in FIG. 6, the logic flow **600** may receive a labeled network flow at block **602.** For example, the information leak control application being executed by the information leak control system **110** may generate, receive, or otherwise access one or more labeled information flows **320**. The labeled information flow **320** may include labeled information leaks, such as labeled PII leaks. For example, the labeled information flow **320** may include a label indicating that a "device_id" and a "username" key in a network flow are or may be information leaks. At block **604,** the logic flow **600** may extract and select features from the labeled network flow. For example, the information leak control application may analyze the labeled information flow **320** and extract out labeled elements as extracted features. In some embodiments, the number of information leak features may be reduced, for example, to improve accuracy and efficiency. In some embodiments, a set of selected features may be from the extracted features based on one or more factors.

The logic flow **600** may generate classifiers based on the selected features at block **606**. For example, the information leak control application may implement a training process **330** to generate classifiers that may be used to determine and/or predict whether a network flow includes information leaks. At block **608,** the logic flow **600** may generate an information leak model. For example, the information leak control application may use the classifiers to generate an information leak model **335**. In some embodiments, the information leak model **335** may be for a particular domain and/or OS (for instance, a per-domain-and-OS classifier).

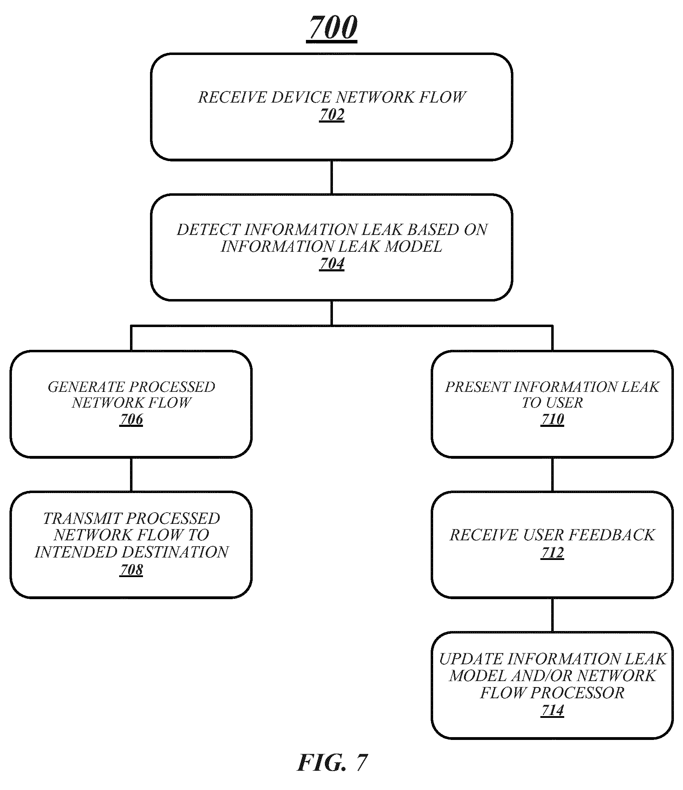

FIG. 7 depicts an illustrative logic flow according to a first embodiment. More specifically, FIG. 7 illustrates one embodiment of a logic flow **700**. The logic flow **700** may be representative of some or all of the operations executed by one or more embodiments described herein. For example, the logic flow **700** may illustrate operations performed by the information leak control system **100**.

In the illustrated embodiment shown in FIG. 7, the logic flow **700** may receive a device network flow at block **702.** For example, the information leak control system **110** may receive a device network flow **115** from a computing device **105**. For example, a VPN proxy **215** of the information leak control system **110** may receive the device network flow **115**. At block **704,** the logic flow **700** may detect an information leak based on an information leak model. For example, an information leak detection **340** process may analyze the device network flow **115** using a model **335** to detect and/or predict whether the device network flow **115** includes an information leak, such as a PII leak.

At block **706,** the logic flow **700** may generate a processed network flow. For example, a network flow processor **345** may modify the device network flow **115** based on the information leak and/or one or more information leak control processes. For example, the information leak control process may be configured to remove the information leak, replace the information leak, or the like to generate a processed network flow **120**. The logic flow **700** may transmit the processed network flow to an intended destination at block **708**. For example, the information leak control system **110** may transmit the processed network flow **120** to the network **125**, which was the intended target for the device network flow **115** before being redirected to the information leak control system **110**.

The logic flow **700** may operate to present the information leak to a user at block **710**. For example, the information leak control system **110** may present a GUI **130** to a user that is configured to graphically display the information leak and/or information associated therewith to a user. At block **712,** the logic flow **700** may receive user feedback. For example, a user may confirm, reject, or otherwise provide user feedback **355** in the form of a status **412** of an information leak **410** using the GUI **130**. In another example, a user may provide user feedback **355** in the form of one or more actions **420a-n** to take responsive to detection of an information leak **410**. The logic flow **700** may update the information leak model and/or the network flow processor at block **714**. For example, the model **335** may be updated to add and/or modify a classifier relating to an information leak responsive to a user confirming, rejecting, or otherwise providing a status **412** of an information leak. In another example, the network flow processor **345** may add and/or modify an information leak control process based on a user providing an action **420a-n** associated with an information leak.

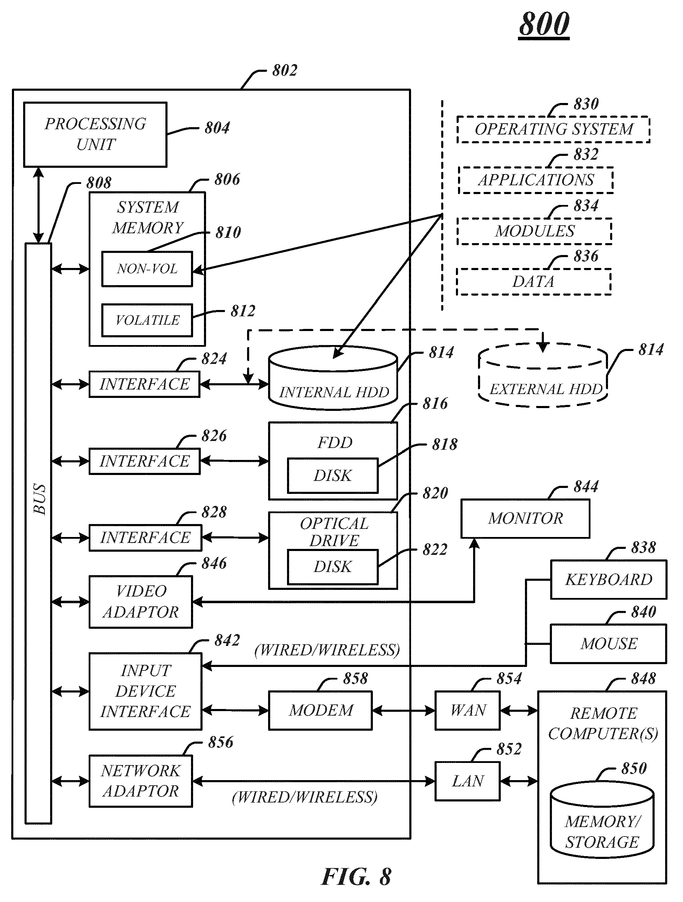

FIG. 8 illustrates an embodiment of a computing architecture **800** suitable for implementing various embodiments as previously described. More specifically, various aspects and/or portions of computing architecture **800** (or variants thereof) may be implemented as part of one or more systems, devices, embodiments and so forth to implement various particular features discussed above with respect to FIGS. 1-7. In one embodiment, one or more devices of computing architecture **800** may be implemented as part of information leak control system **100**. Further, various components of computer architecture **800** may be used to implemented or enable any one of the processing flows previously discussed. Embodiments are not limited in this context.

Components may be communicatively coupled to each other by various types of communications media to coordinate operations. The coordination may involve the unidirectional or bi-directional exchange of information. For instance, the components may communicate information in the form of transmissions communicated over the communications media. The information can be implemented as transmissions allocated to various transmission lines. In such allocations, each message is a transmission. Further embodiments, however, may alternatively employ data messages. Such data messages may be sent across various connections. Exemplary connections include parallel interfaces, serial interfaces and bus interfaces.

The computing architecture **800** includes various common computing elements, such as one or more processors, multi-core processors, co-processors, memory units, chipsets, controllers, peripherals, interfaces, oscillators, timing devices, video cards, audio cards, multimedia input/output (I/O) components, power supplies and so forth. The embodiments, however, are not limited to implementation by the computing architecture **800**.

As shown in FIG. 8, the computing architecture **800** comprises a processing unit **804,** a system memory **806** and a system bus **808**. The processing unit **804** can be any of various commercially available processors. Processing unit **804** may be one or more of any type of computational element, such as but not limited to, a microprocessor, a processor, central processing unit, digital signal processing unit, dual core processor, mobile device processor, desktop processor, single core processor, a system-on-chip (SoC) device, complex instruction set computing (CISC) microprocessor, a reduced instruction set (RISC) microprocessor, a very long instruction word (VLIW) microprocessor, or any other type of processor or processing circuit on a single chip or integrated circuit. The processing unit **804** may be connected to and communicate with the other elements of the computing system via an interconnect. Further, processing unit **804** may include other components, such as an uncore component including logic to process information, instructions and so forth not essential to core processing.

The system bus **808** provides an interface for system components including, but not limited to, the system memory **806** to the processing unit **804**. The system bus **808** can be any of several types of bus structure that may further interconnect to a memory bus (with or without a memory controller), a peripheral bus and a local bus using any of a variety of commercially available bus architectures. Interface adapters may connect to the system bus **808** via a slot architecture. Example slot architectures may include without limitation Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA) and the like.

The computing architecture **800** may comprise or implement various articles of manufacture. An article of manufacture may comprise a computer-readable storage medium to store logic. Examples of a computer-readable storage medium may include any tangible media capable of storing electronic data, including volatile memory or non-volatile memory, removable or non-removable memory, erasable or non-erasable memory, writeable or re-writeable memory and so forth. Examples of logic may include executable computer program instructions implemented using any suitable type of code, such as source code, compiled code, interpreted code, executable code, static code, dynamic code, object-oriented code, visual code and the like. Embodiments may also be at least partly implemented as instructions contained in or on a non-transitory computer-readable medium, which may be read and executed by one or more processors to enable performance of the operations described herein.

The system memory **806** may include various types of computer-readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information. In the illustrated embodiment shown in FIG. 8, the system memory **806** can include non-volatile memory **810** and volatile memory **812**. A basic input/output system (BIOS) can be stored in the non-volatile memory **810**.

The computer **802** may include various types of computer-readable storage media in the form of one or more lower speed memory units, including an internal (or external) hard disk drive (HDD) **814**, a magnetic floppy disk drive (FDD) **816** to read from or write to a removable magnetic disk **818** and an optical disk drive **820** to read from or write to a removable optical disk **822** (e.g., a CD-ROM or DVD). The HDD **814**, FDD **816** and optical disk drive **820** can be connected to the system bus **808** by a HDD interface **824**, an FDD interface **826** and an optical drive interface 628, respectively. The HDD interface **824** for external drive implementations can include at least one or both of Universal Serial Bus (USB) and IEEE 794 interface technologies.

The drives and associated computer-readable media provide volatile and/or nonvolatile storage of data, data structures, computer-executable instructions and so forth. For example, a number of program modules can be stored in the drives, non-volatile memory **810** and volatile memory **812**, including an operating system **830**, one or more application programs **832**, other program modules **834** and program data **736**. In one embodiment, the one or more application programs **832**, other program modules **834** and program data **836** can include, for example, the various applications and/or components of system **100**.

A user can enter commands and information into the computer **802** through one or more wire/wireless input devices, for example, a keyboard **838** and a pointing device, such as a mouse **840**. Other input devices may include microphones, infra-red (IR) remote controls, radiofrequency (RF) remote controls, game pads, stylus pens, card readers, dongles, finger print readers, gloves, graphics tablets, joysticks, keyboards, retina readers, touch screens (e.g., capacitive, resistive, etc.), trackballs, trackpads, sensors, styluses and the like. These and other input devices are often connected to the processing unit **804** through an input device interface **842** that is coupled to the system bus **808**, but can be connected by other interfaces such as a parallel port, IEEE 894 serial port, a game port, a USB port, an IR interface and so forth.

A monitor **844** or other type of display device is also connected to the system bus **808** via an interface, such as a video adaptor **846**. The monitor **844** may be internal or external to the computer **802**. In addition to the monitor **844**, a computer typically includes other peripheral output devices, such as speakers, printers and so forth.

The computer **802** may operate in a networked environment using logical connections via wire and/or wireless communications to one or more remote computers, such as a remote computer **848**. The remote computer **848** can be a workstation, a server computer, a router, a personal computer, portable computer, microprocessor-based entertainment appliance, a peer device or other common network node and typically includes many or all of the elements described relative to the computer **802**, although, for purposes of brevity, only a memory/storage device **850** is illustrated. The logical connections depicted include wire/wireless connectivity to a local area network (LAN) **852** and/or larger networks, for example, a wide area network (WAN) **854**. Such LAN and WAN networking environments are commonplace in offices and companies and facilitate enterprise-wide computer networks, such as intranets, all of which may connect to a global communications network, for example, the Internet.

When used in a LAN networking environment, the computer **802** is connected to the LAN **852** through a wire and/or wireless communication network interface or adaptor **856**. The adaptor **856** can facilitate wire and/or wireless communications to the LAN **852**, which may also include a wireless access point disposed thereon for communicating with the wireless functionality of the adaptor **856**.

When used in a WAN networking environment, the computer **802** can include a modem **858**, or is connected to a communications server on the WAN **854**, or has other means for establishing communications over the WAN **854**, such as by way of the Internet. The modem **858**, which can be internal or external and a wire and/or wireless device, connects to the system bus 808 via the input device interface **842**. In a networked environment, program modules depicted relative to the computer **802**, or portions thereof, can be stored in the remote memory/storage device **850**. It will be appreciated that the network connections shown are exemplary and other means of establishing a communications link between the computers can be used.

The computer 802 is operable to communicate with wire and wireless devices or entities using the IEEE 802 family of standards, such as wireless devices operatively disposed in wireless communication (e.g., IEEE 802.11 over-the-air modulation techniques). This includes at least WiFi (or Wireless Fidelity), WiMax and Bluetooth™ wireless technologies, 3G, 4G, LTE wireless technologies, among others. Thus, the communication can be a predefined structure as with a conventional network or simply an ad hoc communication between at least two devices. WiFi networks use radio technologies called IEEE 802.11x (a, b, g, n, etc.) to provide secure, reliable, fast wireless connectivity. A WiFi network can be used to connect computers to each other, to the Internet and to wire networks (which use IEEE 802.3-related media and functions).

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Further, some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still cooperate or interact with each other. Furthermore, aspects or elements from different embodiments may be combined.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit and scope of the appended claims.

**Claims**

1. A system for controlling information leaks in network flows, comprising:

   at least one processor circuit; and
   a memory unit coupled to the processor circuit, the memory unit to store one or more programming instructions that, when executed, cause the processor to:

   generate an information leak model based on at least one labeled network flow comprising at least one labeled information leak,
   detect an information leak of a device network flow of at least one device based on the information leak model,
   receive user feedback associated with the information leak, and
   update the model based on the user feedback.

2. The system of claim 1, the information leak comprising a personally identifiable information (PII) leak.

3. The system of claims 1 or 2, the device network flow comprising one of a hypertext transfer protocol (HTTP) and secure HTTP network flow.

4. The system of claims 1, 2 or 3, the one or more programming instructions, when executed, cause the processor to present the information leak on a graphical user interface (GUI).

5. The system of any preceding claim, the one or more programming instructions, when executed, cause the processor to generate a processed network flow.

6. The system of claim 5, the processed network flow to comprise the device network flow modified based on at least one information leak control process.

7. The system of claim 6, the at least one information leak control process comprising at least one of blocking the information leak and replacing the information leak.

8. The system of any preceding claim, the user feedback comprising a status of the information leak.

9. The system of any of claims 1 to 7, the user feedback comprising an action associated with the information leak.

10. The system of any preceding claim, the one or more programming instructions, when executed, cause the processor to receive the device network flow as redirected network traffic via a middlebox.

**11.** A computer-implemented method for controlling information leaks in network flows, the method comprising, by at least one processor circuit:

generating an information leak model based on at least one labeled network flow comprising at least one labeled information leak;

detecting an information leak of a device network flow of at least one device based on the information leak model;

receiving user feedback associated with the information leak; and

updating the model based on the user feedback.

**12.** The method of claim 11, the information leak comprising a personally identifiable information (PII) leak.

**13.** The method of claims 11 or 12, the device network flow comprising one of a hypertext transfer protocol (HTTP) and secure HTTP network flow.

**14.** The method of claims 11, 12 or 13, comprising presenting the information leak on a graphical user interface (GUI).

**15.** The method of any of claims 11 to 14, comprising generating a processed network flow.

# <u>*Operating Environment 100*</u>

Computing Device
105

*115*

Information Leak
Control System
110

GUI
130

*120*

Network
125

**FIG. 1**

# Information Leak Control System 110

Server 205

210

VPN Proxy 215

Web Server 220

225

230a

230b

...

230c

235

**FIG. 2**

# Operating Environment 300

**Information Leak Control System 110**

*Model Generation Mode 305*

Labeled Network
Flow 320 →

| Features 325 | → | Training 330 | → | Model 335 |

*Information Leak Detection Mode 310*

355

Device Network
Flow 115 →

| Model 335 | → | Information Leak Detection 340 | → | GUI 130 |

| Network Flow Processor 345 |

Processed
Network Flow
120 →

*FIG. 3*

EP 3 131 260 A1

# GUI 130

## 410
*Information Type A*

*Information Type B*

*Information Type C*

⋮

*Information Type N*

> *Status 412*

## 415

*Information <key>=<value>
has been sent to <address>
by <application>.*

## 420

> *Remove 420a*

> *Modify 420b*

> *Destination 420c*

⋮

> *Communication Channel 420n*

## 430

435

435

435

435

435

## FIG. 4

*505a*

**510**
*Flow Contains:*
*idfa*

*No*        *Yes*

**515**
*Negative*

**515**
*Positive*

*505b*

**510**
*Flow Contains:*
*534.30Nexus*

*No*        *Yes*

**515**
*Negative*

**510**
*Flow Contains:*
*session*

*No*        *Yes*

**510**
*Flow Contains:*
*deviceId*

**515**
*Negative*

*No*        *Yes*

**515**
*Postive*

**515**
*Negative*

**FIG. 5**

**_600_**

RECEIVE LABELED NETWORK FLOW
_602_

EXTRACT AND SELECT FEATURES FROM
LABELED NETWORK FLOW
_604_

GENERATE CLASSIFIERS BASED ON
SELECTED FEATURES
_606_

GENERATE INFORMATION LEAK MODEL
_608_

*FIG. 6*

## 700

```
RECEIVE DEVICE NETWORK FLOW
702
```

```
DETECT INFORMATION LEAK BASED ON
INFORMATION LEAK MODEL
704
```

```
GENERATE PROCESSED
NETWORK FLOW
706
```

```
PRESENT INFORMATION LEAK
TO USER
710
```

```
TRANSMIT PROCESSED
NETWORK FLOW TO
INTENDED DESTINATION
708
```

```
RECEIVE USER FEEDBACK
712
```

```
UPDATE INFORMATION LEAK
MODEL AND/OR NETWORK
FLOW PROCESSOR
714
```

### FIG. 7

_800_

**FIG. 8**

Europäisches
Patentamt

European
Patent Office

Office européen
des brevets

## EUROPEAN SEARCH REPORT

Application Number

EP 16 18 4108

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/235355 A1 (CHEN YI [CN] ET AL) 17 September 2009 (2009-09-17) * abstract * * paragraph [0002] * * paragraph [0004] * * paragraph [0007] * * paragraph [0009] * * paragraph [0010] * ----- | 1-15 | INV. H04L29/06 G06F21/62 H04W12/02 |
| A | US 2013/298254 A1 (THOMAS HALL MATTHEW RICHARD [US] ET AL) 7 November 2013 (2013-11-07) * paragraph [0015] * * paragraph [0038] - paragraph [0039] * ----- | 1-15 | |
| A | US 2012/042361 A1 (WONG ONN CHEE [SG] ET AL) 16 February 2012 (2012-02-16) * paragraph [0132] * ----- | 1-15 | |
| A | US 2010/235918 A1 (MIZRAHI RAMI [IL] ET AL) 16 September 2010 (2010-09-16) * paragraph [0214] * ----- | 1-15 | TECHNICAL FIELDS SEARCHED (IPC) H04L G06F H04W |

The present search report has been drawn up for all claims

| Place of search | Date of completion of the search | Examiner |
|---|---|---|
| Munich | 14 November 2016 | Caragata, Daniel |

EPO FORM 1503 03.82 (P04C01)

## ANNEX TO THE EUROPEAN SEARCH REPORT
## ON EUROPEAN PATENT APPLICATION NO.

EP 16 18 4108

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2016

| Patent document cited in search report | | Publication date | Patent family member(s) | | Publication date |
|---|---|---|---|---|---|
| US 2009235355 | A1 | 17-09-2009 | NONE | | |
| US 2013298254 | A1 | 07-11-2013 | CN | 103155487 A | 12-06-2013 |
| | | | EP | 2633646 A1 | 04-09-2013 |
| | | | US | 2013298254 A1 | 07-11-2013 |
| | | | WO | 2012057737 A1 | 03-05-2012 |
| US 2012042361 | A1 | 16-02-2012 | US | 2012042361 A1 | 16-02-2012 |
| | | | WO | 2010011180 A1 | 28-01-2010 |
| US 2010235918 | A1 | 16-09-2010 | US | 2010235918 A1 | 16-09-2010 |
| | | | WO | 2010105184 A2 | 16-09-2010 |

EPO FORM P0459

For more details about this annex : see Official Journal of the European Patent Office, No. 12/82

## REFERENCES CITED IN THE DESCRIPTION

**Patent documents cited in the description**

- US 62205373 A